# EUROPÄISCHE PATENTSCHRIFT

(11) **EP 3 166 830 B1**
(45) Veröffentlichungstag und Bekanntmachung des Hinweises auf die Patenterteilung: **21.12.2022**
(21) Anmeldenummer: 15723891.6
(22) Anmeldetag: 12.05.2015
(51) Int. Cl.: B60W 40/12, G07C 5/00, B60W 50/00

(54) **VORRICHTUNG UND VERFAHREN ZUM BESTIMMEN VON BELASTUNGSPROFILEN VON KRAFTFAHRZEUGEN**
DEVICE AND METHOD FOR DETERMINING LOAD PROFILES OF MOTOR VEHICLES
DISPOSITIF ET PROCÉDÉ SERVANT À DÉTERMINER DES PROFILS DE CHARGE DE VÉHICULES AUTOMOBILES

(30) Priorität: 11.07.2014 DE 102014213522
(43) Veröffentlichungstag der Anmeldung: 17.05.2017
(73) Patentinhaber: Robert Bosch GmbH, 70442 Stuttgart (DE)
(72) Erfinder: ZWISSLER, Fabian, 71384 Weinstadt (DE); WESTENDORF, Andreas, 31137 Hildesheim (DE); EXLER, Robert, 73207 Plochingen (DE)
(86) Internationale Anmeldenummer: PCT/EP2015/060497
(87) Internationale Veröffentlichungsnummer: WO 2016/005086

(56) Entgegenhaltungen:
- EP-A2- 2 056 179
- WO-A1-2012/079716
- DE-A1-102008 001 803
- DE-A1-102008 049 754
- GB-A- 2 473 956
- US-A1- 2007 100 518
- US-A1- 2013 244 210

## Beschreibung

Die Erfindung betrifft eine Vorrichtung und ein Verfahren zum Bestimmen von Belastungsprofilen von Kraftfahrzeugen; insbesondere von Kraftfahrzeugen einer Fahrzeugflotte.

### Stand der Technik

Häufig besteht das Bedürfnis, die Belastung und den daraus resultierenden Verschleiß von Kraftfahrzeugen einer Fahrzeugflotte zu bestimmen. Dies kann anhand von Fahrprofilen erfolgen, welche die Nutzung des Kraftfahrzeugs abbilden. Solche Fahrprofile können auf der Grundlage von GPS-Daten erzeugt werden, welche die aktuelle Position und Geschwindigkeit des Kraftfahrzeugs zur Verfügung stellen. Auf GPS-Daten beruhende Systeme liefern genaue Informationen über das Fahrverhalten. Dies führt jedoch zu (datenschutz)rechtlichen Problemen, dass genaue Bewegungsprofile des Kraftfahrzeugs und seines Fahrers erstellt werden können.

Aus dem Dokument EP2056179 A2 ist ein Verfahren zur Schädigungsvorhersage von Bauteilen eines Kraftfahrzeuges bekannt. Das Dokument DE 10 2008 001803 A1 zeigt ein Verfahren zum Erfassen eines Betriebsalters einer Komponente eines Hybridfahrzeugs mit Erfassen einer Zustandsänderung der Komponente und Ändern eines Zustandszählwertes bei Vorliegen der Zustandsänderung, wobei der Zustandszählwert auf das Betriebsalter der Komponente hinweist. Das Dokument DE102008049754 A1 , auf welchem die zweiteilige Anspruchsfassung basiert, beschreibt ein Verfahren und eine Vorrichtung zur Verschleißdiagnose eines Kraftfahrzeuges.

Aufgabe der Erfindung ist es daher, eine alternative Vorrichtung und ein alternatives Verfahren zum Bestimmen von Belastungsprofilen von Kraftfahrzeugen; insbesondere von Kraftfahrzeugen einer Fahrzeugflotte bereit zu stellen, wobei die Belastungsprofile erstellt werden können, ohne ein genaues Bewegungsprofil des jeweiligen Kraftfahrzeugs zu erstellen.

### Offenbarung der Erfindung

Gemäß der vorliegenden Erfindung wird die oben genannte Aufgabe mit einer Vorrichtung nach Anspruch 1 und einem Verfahren nach Anspruch 7 gelöst.

Vorteilhafte Ausgestaltungen der vorliegenden Erfindung sind in den abhängigen Ansprüchen definiert.

Die Erfindung ermöglicht es, Fahrprofile, aus denen die Nutzung, Belastung und Abnutzung eines Kraftfahrzeugs bestimmt werden kann, anhand von Fahrzustandsparametern zu bestimmen, die während der Fahrt des Kraftfahrzeugs ermittelt werden, wobei die Fahrzustandsparameter nicht den exakten Ort des Kraftfahrzeugs umfassen, so dass keine Bewegungsprofile des Kraftfahrzeugs und seines Fahrers erstellt werden können. Die Abnutzung und der Verschleiß der Kraftfahrzeuge, insbesondere auch im Vergleich der Kraftfahrzeuge einer Fahrzeugflotte, kann somit ohne die mit dem Auswerten von GPS-Daten verbundenen (datenschutz)rechtlichen Probleme bestimmt werden.

In einer Ausführungsform ist zusätzlich eine Vergleichsvorrichtung vorgesehen, die ausgebildet ist, die numerischen Gesamtbelastungsparameter mehrerer Kraftfahrzeuge, insbesondere der Kraftfahrzeuge einer Fahrzeugflotte, miteinander zu vergleichen. Die Vergleichsvorrichtung umfasst eine Sortiervorrichtung , die ausgebildet ist, die Kraftfahrzeuge anhand ihrer Gesamtbelastungsparameter zu sortieren. Auf diese Weise kann eine Rangliste der Kraftfahrzeuge erstellt werden, die es ermöglicht, besonders stark belasteten Kraftfahrzeuge, die einem besonders hohen Verschleiß ausgesetzt sind, zu identifizieren.

In einer Ausführungsform umfasst die Fahrzustandsbewertungsvorrichtung eine Speichervorrichtung, in der erste und zweite Einträge gespeichert sind, wobei jeder zweite Eintrag mit wenigstens einem ersten Eintrag verknüpft ist; und eine Vergleichs- und Zuordnungsvorrichtung, die ausgebildet ist, durch Vergleichen des bestimmten Fahrzustandsparameters mit den ersten Einträgen einen ersten Eintrag auszuwählen und dem Fahrzustandsparameter einen mit dem ersten Eintrag verknüpften zweiten Eintrag als Belastungsparameter zuzuordnen. Die ersten Einträge können dabei insbesondere die Grenzen von Intervallen bezeichnen, so dass Fahrzustandsparametern, die in einem von den ersten Einträgen bezeichneten Intervall liegen, ein entsprechender zweiter Eintrag als Belastungsparameter zugeordnet wird.

Durch eine derartige Vergleichs- und Zuordnungsvorrichtung können den Fahrzustandsparametern besonders effektiv die entsprechenden Belastungsparameter zugeordnet werden.

Die Fahrzustandsparameter können insbesondere die Betriebsdauer und die Drehzahl des Motors umfassen. Alternativ oder zusätzlich können die Fahrzustandsparameter auch die Streuung dieser Größen während der Fahrt, insbesondere in Form ihrer statistischen Standardabweichung, umfassen.

Die Betriebsdauer, die Geschwindigkeit, die Längs- und die Querbeschleunigung sind für die Nutzung und Belastung des Kraftfahrzeugs repräsentative Größen. Das Auswerten der Streuung dieser Parameter, z.B. in Form der statistischen Standardabweichung, ermöglicht es darüber hinaus, zu bestimmen, ob das Kraftfahrzeug eher gleichmäßig oder eher ungleichmäßig mit stark schwankenden Parametern genutzt wird. Letzteres hat eine höhere Abnutzung zur Folge, die anhand des Auswertens der Streuung identifiziert und berücksichtigt werden kann. Die Qualität der Belastungsprofile wird daher verbessert, wenn die Streuung bzw. Schwankung der Fahrzustandsparameter berücksichtigt wird.

Die Fahrzustandsbewertungsvorrichtung kann insbesondere ausgebildet sein, zu bestimmen, wie oft ein Fahrzustandsparameter einen dem Fahrzustandsparameter zugeordneten vorgegebenen Grenzwert überschreitet, und der Anzahl der Überschreitungen des Grenzwertes während einer Fahrt des Kraftfahrzeugs einen numerischen Belastungsparameter zuzuordnen.

Überschreiten einzelne Fahrzustandsparameter vorgegebene Grenzwerte, kann dies eine besonders hohe Abnutzung des Kraftfahrzeugs zur Folge haben. Diese erhöhte Abnutzung kann durch Erfassen und Zählen der Anzahl der Überschreitungen derartiger Grenzwerte bei der Erstellung des Fahrprofils berücksichtigt werden, um die Qualität und Aussagekraft der Belastungsprofile noch weiter zu verbessern.

In dem erfindungsgemäßen Ausführungsbeispiel ist die Fahrzustandsbewertungsvorrichtung ausgebildet, einen Belastungsparameter aus einer Kombination von wenigstens zwei Fahrzustandsparametern zu bestimmen. Häufig ergibt sich das Ausmaß der Belastung des Kraftfahrzeugs erst aus einer Kombination mehrerer Fahrzustandsparameter. So kann beispielsweise die von Brems- und Beschleunigungsvorgängen verursachte Abnutzung abhängig von der Geschwindigkeit sein, bei der diese Brems- bzw. Beschleunigungsvorgänge durchgeführt werden.

Belastungsparameter, beispielsweise mit Hilfe einer Matrix oder Tabelle aus einer Kombination von wenigstens zwei Fahrzustandsparametern, wie gemäß der vorliegenden Erfindung in Form der Geschwindigkeit und der Längs- oder Querbeschleunigung des Kraftfahrzeugs, zu bestimmen, erhöht daher die Qualität und Aussagekraft des Belastungsprofils.

In einem Ausführungsbeispiel weist die Einrichtung zusätzlich wenigstens eine Übertragungsvorrichtung auf, die ausgebildet ist, einen Fahrzustandsparameter insbesondere drahtlos von der Fahrzustandsbestimmungsvorrichtung an die Fahrzustandsbewertungsvorrichtung zu übertragen. In diesem Fall werden die Fahrzustandsparameter im Kraftfahrzeug fortlaufend erfasst und entweder unmittelbar mit Hilfe der Übertragungsvorrichtung an eine externe, insbesondere zentrale, Fahrzustandsbewertungsvorrichtung übertragen, um dort ausgewertet zu werden. In dem Kraftfahrzeug kann auch eine Speichervorrichtung vorgesehen sein, um die erfassten Fahrzustandsparameter zunächst im Kraftfahrzeug zu speichern und zu vorgegebenen Zeitpunkten, z.B. bei Beendigung der Fahrt/Abstellen des Motors, gesammelt an die Fahrzustandsbewertungsvorrichtung zu übertragen. Auf diese Weise kann der Aufwand der Datenübertragung reduziert werden. Wenn die Kraftfahrzeuge, z.B. als Bestandteil einer Fahrzeugflotte, immer wieder definierte Punkte, z.B. vorbestimmte Garagen, Service-Punkte und/oder Tankstellen, ansteuern, kann die Datenübertragung an diesen definierten Punkten kostengünstig mit einer kurzreichweitigen Datenverbindung, die insbesondere auf die Nutzung eines Mobilfunknetzes verzichtet, durchgeführt werden.

Alternativ können die Belastungsparameter innerhalb des Kraftfahrzeugs aus den Fahrzustandsparametern bestimmt werden, so dass an Stelle der Fahrzustandsparameter die Belastungsparameter mit Hilfe der Übertragungsvorrichtung von der Fahrzustandsbewertungsvorrichtung, die in diesem Falle in dem Kraftfahrzeug angeordnet ist, an die Additionsvorrichtung übertragen werden. Dies verbessert den Datenschutz noch weiter, dass auf diese Weise keine Fahrzustandsparameter sondern nur die abstrakteren Belastungsparameter übertragen werden.

### Kurze Beschreibung der Figuren:

Fig. 1 zeigt in einer schematischen Ansicht ein Kraftfahrzeug mit einer erfindungsgemäßen Vorrichtung zum Bestimmen seines Belastungsprofils.
Fig. 2 zeigt die Verteilung der Längsbeschleunigung über der Geschwindigkeit für zwei verschiedene Kraftfahrzeuge.
Fig. 3 zeigt eine der Fig. 2 entsprechende Darstellung für negative Beschleunigungen, die Bremsvorgänge bezeichnen.
Fig. 4 zeigt die während einer Fahrt aufgetretenen Querbeschleunigungen als Funktion der Geschwindigkeit.

### Figurenbeschreibung

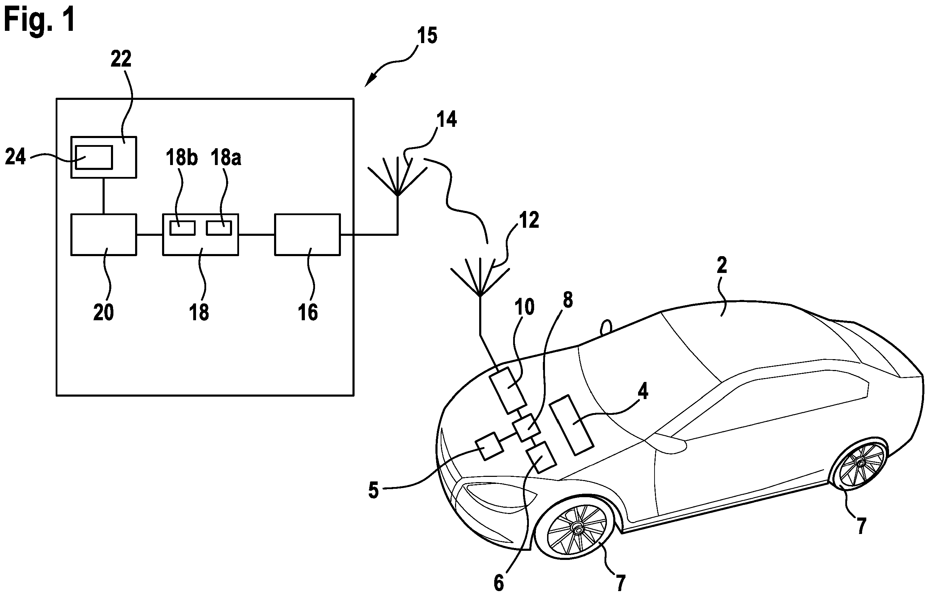

Fig. 1 zeigt in einer schematischen Ansicht ein Kraftfahrzeug 2 mit einem Motor 4 und einer erfindungsgemäßen Vorrichtung zum Bestimmen seines Belastungsprofils.

In dem Kraftfahrzeug 2 ist eine Fahrzustandsbestimmungsvorrichtung 8 vorgesehen, die mit mehreren Sensoren 5, 6 verbunden ist, um Fahrzustandsparameter des Kraftfahrzeugs 2, wie beispielsweise dessen Betriebsdauer, Geschwindigkeit, Beschleunigung in Längsund/oder Querrichtung usw., zu bestimmen, wobei eine Kombination von wenigstens zwei Fahrzustandsparametern, nämlich die Geschwindigkeit des Kraftfahrzeugs (2) und die Längs- und/oder Querbeschleunigung des Kraftfahrzugs (2) die Erfindung umfasst. Die Fahrzustandsbestimmungsvorrichtung 8 ist auch mit einer Übertragungsvorrichtung 10 verbunden, die ausgebildet ist, die von der Fahrzustandsbestimmungsvorrichtung 8 bestimmten Fahrzustandsparameter mit Hilfe einer Antenne 12 drahtlos an einen außerhalb des Kraftfahrzeugs 2 angeordneten Server 15 zu übertragen. Die Übertragung kann beispielsweise über WLAN, Bluetooth oder einer Mobilfunkverbindung erfolgen.

Der Server 15 hat eine Empfangsvorrichtung 16 mit einer Antenne 14 zum Empfangen der von der Übertragungsvorrichtung 10 ausgesendeten Signale.

Die von der Empfangsvorrichtung 16 empfangenen Fahrzustandsparameter des Kraftfahrzeugs 2 werden von der Empfangsvorrichtung 16 an eine Fahrzustandsbewertungsvorrichtung 18 weitergeleitet ist, die ausgebildet ist, jedem der von der Fahrzustandsbestimmungsvorrichtung 8 über die Datenverbindung übertragenen Fahrzustandsparameter einen numerischen Belastungsparameter zuzuordnen.

Dazu umfasst die Fahrzustandsbewertungsvorrichtung 18 eine Speichervorrichtung 18a, in der wenigstens erste und zweite Einträge gespeichert sind, wobei jeder zweite Eintrag mit wenigstens einem ersten Eintrag verknüpft ist. Die Fahrzustandsbewertungsvorrichtung 18 umfasst darüber hinaus eine Vergleichs- und Zuordnungsvorrichtung 18b, die ausgebildet ist, durch Vergleichen eines von der Empfangsvorrichtung 16 übertragenen Fahrzustandsparametern mit den ersten Einträgen einen ersten Eintrag auszuwählen, der mit dem übertragenen Fahrzustandsparameter im Rahmen einer vorgegebenen Toleranz übereinstimmt, oder der ein Intervall bezeichnet, in dem sich der übertragene Fahrzustandsparameter befindet, und diesem Fahrzustandsparameter einen mit dem ersten Eintrag verknüpften zweiten Eintrag als Belastungsparameter zuzuordnen.

Der auf diese Weise zugeordnete Belastungsparameter wird einer Additionsvorrichtung 20 zugeführt, die ausgebildet ist, die numerischen Belastungsparameter eines Kraftfahrzeugs, die auf Grundlage der während einer Fahrt des Kraftfahrzeugs 2 übertragenen Fahrzustandsparameter bestimmt worden sind, zu addieren, um einen numerischen Gesamtbelastungsparameter der Fahrt des Kraftfahrzeugs 2 zu bestimmen.

Der Server umfasst auch eine Vergleichsvorrichtung 22, die es ermöglicht, die numerischen Gesamtbelastungsparameter mehrerer Kraftfahrzeuge 2 einer Fahrzeugflotte miteinander zu vergleichen, um stark und weniger stark belastete Kraftfahrzeuge 2 zu identifizieren. Die Vergleichsvorrichtung 22 kann insbesondere auch mit einer Sortiervorrichtung 24 ausgebildet sein, die es ermöglicht, die Kraftfahrzeuge 2 anhand der ihnen zugeordneten Gesamtbelastungsparameter zu sortieren. Auf diese Weise kann eine Rangliste der Kraftfahrzeuge 2 erstellt werden, in der die Kraftfahrzeuge 2 gemäß ihrer Belastung sortiert sind, so dass sowohl stark als auch gering belastete Kraftfahrzeuge 2 einfach und schnell anhand ihrer Position am Anfang bzw. Ende der Rangliste erkannt werden können.

Im Folgenden wird anhand einzelner Beispiele beschrieben, wie aus verschiedenen Fahrzustandsparametern die zugehörigen Belastungsparameter bestimmt werden können.

### Geschwindigkeit:

Ein erstes erfindungsgemäßes Beispiel für einen Fahrzustandsparameter ist die aktuelle Geschwindigkeit des Kraftfahrzeugs 2. Dabei ist eine hohe Abnutzung des Kraftfahrzeugs 2 nicht zwangsläufig mit einer hohen Geschwindigkeit des Kraftfahrzeugs 2 verbunden. Vielmehr hat sich gezeigt, dass gerade der Stadtverkehr mit seinem mittleren Geschwindigkeitsbereich eine hohe Belastung und Abnutzung des Kraftfahrzeugs 2 zur Folge hat; eine ähnlich hohe Belastung tritt erst wieder bei sehr hohen Geschwindigkeiten von mehr 160 km/h auf.

Die Belastungsparameter, die sich aus der jeweiligen Geschwindigkeit des Kraftfahrzeugs 2 ergeben, werden daher dem Kraftfahrzeugzustandsparameter "Geschwindigkeit" beispielsweise anhand der folgenden Tabelle 1 zugeordnet.

**Tabelle 1:**

| Geschwindigkeit | Belastungsparameter |
|---|---|
| 0-60 km/h | 10 |
| 60-130 km/h | 5 |
| 130-160 km/h | 2 |
| >160 km/h | 10 |

Die Auswertung der Geschwindigkeit kann dadurch optimiert werden, dass die im jeweiligen Land geltenden Höchstgeschwindigkeiten auf verschiedenen Straßen (Stadtverkehr, Landstraße, Bundesstraße, Autobahn, "Freeway", "Highway") herangezogen werden, um zu bestimmen, auf welcher Art von Straße das Kraftfahrzeug 2 unterwegs ist. Wie erwähnt, führen Stadtfahrten in der Regel zu einer größeren Abnutzung des Kraftfahrzeugs 2 als Fahrten auf der Autobahn, auch wenn letztere in der Regel mit höheren Geschwindigkeiten durchgeführt werden.

Die Bestimmung des Landes, in dem das Kraftfahrzeug 2 aktuell unterwegs ist, kann durch eine manuelle Eingabe, die Auswertung des aktuell genutzten Mobilfunkbetreibers und/oder der empfangbaren Radiosender erfolgen. Alternativ kann auch ein GPS-Signal herangezogen werden, wobei aus Datenschutzgründen aus den GPS-Informationen nur das Land, in dem sich das Kraftfahrzeug 2 aktuell befindet, bestimmt wird, ohne die GPS-Information vollständig auszuwerten, um den genauen Ort des Kraftfahrzeugs 2 zu bestimmen.

### Beschleunigung:

Ein anderer erfindungsgemäßer Fahrzustandsparameter, der Einfluss auf die Abnutzung des Kraftfahrzeugs 2 hat, ist die Beschleunigung in Längs- und in Querrichtung.

Dabei hat sich gezeigt, dass weniger das absolute Ausmaß an Beschleunigung, bzw. ihr Mittelwert über die gesamte Fahrt, als die Streuung der Geschwindigkeit im Laufe einer Fahrt ein guter Indikator für die Belastung des Kraftfahrzeugs 2 ist.

Eine Möglichkeit, die Streuung der Beschleunigung numerisch zu erfassen, ist es, die Standardabweichung der im Laufe einer Fahrt des Kraftfahrzeugs 2 auftretenden Beschleunigungen um ihren Mittelwert zu bestimmen, und dieser Standardabweichung einen numerischen Belastungsparameter zuzuordnen.

Eine große Standardabweichung, d. h. eine starke Schwankung der während der Fahrt auftretenden positiven und negativen Beschleunigungen, lässt auf eine aggressive Fahrweise schließen, die eine starke Abnutzung des Kraftfahrzeugs 2 zur Folge hat. Eine defensive, das Kraftfahrzeug 2 schonende Fahrweise hat daher gegen eine schmale Verteilung der Beschleunigung um ihren Mittelwert und damit eine kleine Standardabweichung zur Folge.

### Drehzahl:

Neben der Geschwindigkeit und der Beschleunigung kann auch die Drehzahl des Motors 4 erfasst und ausgewertet werden, um die Belastung des Kraftfahrzeugs 2, insbesondere des Motors 4, der (nicht gezeigten) Kupplung und der Reifen 7, zu bestimmen. So können beispielsweise Gangwechselvorgänge anhand starker Schwankungen der Drehzahl identifiziert werden, aus denen auf die Belastung und Abnutzung der Kupplung geschlossen werden kann. Auf diese Weise können Wartungsintervalle für die Kupplung und ein ggf. notwendiger Austausch der Kupplungsbeläge in Abhängigkeit von der Nutzung des Kraftfahrzeugs 2 bestimmt werden ("predictive maintenance"), so dass zu große Wartungsintervalle bei einer starken Nutzung des Kraftfahrzeugs 2 und/oder bei einer aggressiven Fahrweise ebenso vermieden werden können, wie unnötig kurze Wartungsintervalle bei einer geringen und/oder schonenden Nutzung des Kraftfahrzeugs 2.

### Überschreiten von Grenzwerten:

Zusätzlich zu einer Auswertung der Standardabweichung können Grenzwerte für die Geschwindigkeit und/oder die Beschleunigung definiert werden, wobei ein Belastungszähler jedes Mal erhöht wird, wenn ein im Laufe einer Fahrt des Kraftfahrzeugs 2 ermittelter Fahrzustandsparameter einen derartigen Grenzwert überschreitet. Die Summe der während einer Fahrt ermittelten Grenzwertüberschreitungen wird nach der Beendigung der Fahrt einem Belastungsparameter zugeordnet. Auf diese Weise können besonders belastungs- und abnutzungsrelevante Fahrzustände, beispielsweise besonders starke Beschleunigungen, Vollbremsungen und/oder hohe Motordrehzahlen, insbesondere Motordrehzahlen "im roten Bereich", erfasst und zur Auswertung herangezogen werden.

Nach Beendigung der Fahrt können die im Laufe der Fahrt angesammelten Belastungsparameter addiert werden, um einen Gesamtbelastungsparameter zu bestimmen.

Auf Grundlage des Gesamtbelastungsparameters, der die Summe der einzelnen Belastungsparameter darstellt, kann eine Rangliste der Kraftfahrzeuge 2 erstellt werden.

Alternativ kann für jeden einzelnen Fahrzustands- bzw. Belastungsparameter eine eigene Rangliste erstellt werden, um fahrzustandsparameterspezifische Ranglisten zu erzeugen. In diesem Fall kann eine Gesamtrangliste auf Grundlage der Positionen der Kraftfahrzeuge 2 in den fahrzustandsparameterspezifischen Ranglisten erstellt werden.

Die Ranglisten können insbesondere unter Verwendung eines 20/60/20-Schemas ausgewertet werden, wobei die 20% der Kraftfahrzeuge 2 einer Fahrzeugflotte, welche die 20% größten Gesamtbelastungsparameter aufweisen, einer ersten, hochbelasteten Klasse zugeordnet werden, und die letzten 20% der Kraftfahrzeuge 2 einer Fahrzeugflotte, welchen die 20% geringsten Gesamtbelastungsparameter aufweisen, einer zweiten, Niedrigbelastungsklasse zugeordnet werden.

### Kombinationen von Fahrzustandsparametern:

Die Auswertung der Fahrzustände des Kraftfahrzeugs 2 wird gemäß der vorliegenden Erfindung noch weiter verbessert, indem Kombinationen verschiedener Fahrzustandsparameter zur Auswertung herangezogen werden.

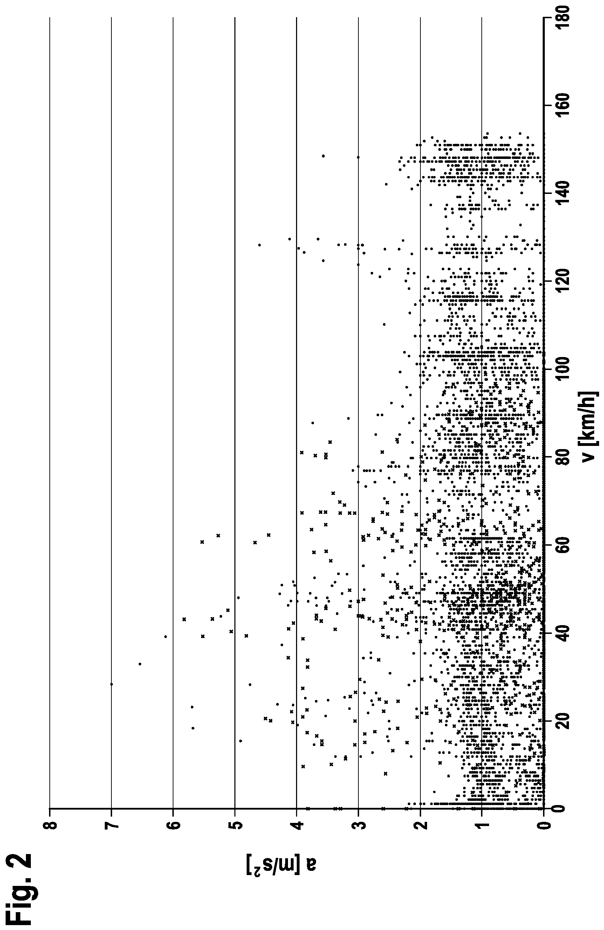

Fig. 2 zeigt beispielhaft die Verteilung der Längsbeschleunigung (auf der vertikalen Achse) über der Geschwindigkeit (auf der horizontalen Achse) für zwei verschiedene Kraftfahrzeuge 2, die durch Kreuzchen bzw. Quadrate dargestellt sind.

Aus der Darstellung der Fig. 2 ist erkennbar, dass die größte Beschleunigung in einem Geschwindigkeitsbereich von ungefähr 25 km/h auftritt. Dies kann auf einen nervösen Fahrer oder auf eine Situation hinweisen, in der der Fahrer vor einer auf gelb schaltenden Ampel beschleunigt, um diese vor dem Rotlicht zu passieren. Beide Fälle haben eine erhöhte Abnutzung des Kraftfahrzeugs 2 zur Folge.

Bei hohen Geschwindigkeiten von mehr als 100 km/h (d.h. insbesondere auf der Autobahn) treten in der Regel keine großen Beschleunigungen auf, da die Kraftfahrzeuge 2 sich die meiste Zeit mit einer vorgegebenen Geschwindigkeit fortbewegen. Hohe Beschleunigungen in diesem Geschwindigkeitsbereich deuten auf einen unruhigen Fahrstil hin, der ebenfalls geeignet ist, die Abnutzung zu erhöhen. Die für die Längsbeschleunigung eines Kraftfahrzeugs 2 ermittelten Werte können daher in Abhängigkeit von der jeweils zugehörigen Geschwindigkeit des Kraftfahrzeugs 2 unterschiedlichen Belastungsparametern zugeordnet werden, wie in der folgenden Tabelle 2 gezeigt.

**Tabelle2:**

| Geschwindigkeit | starke Beschleunigung | besonders starke Beschleunigung |
|---|---|---|
| <50 km/h | 4,0 m/s² | 5,5 m/s² |
| 50-100km/h | 3,5 m/s² | 5,0 m/s² |
| >100 km/h | 3,0 m/s² | 4,5 m/s² |

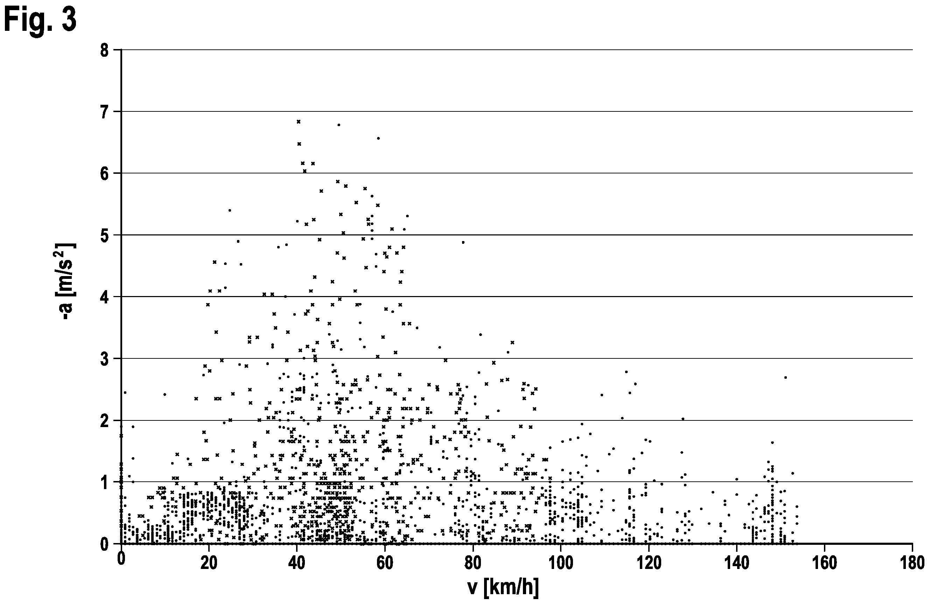

Fig. 3 zeigt eine der Fig. 2 entsprechende Darstellung, d. h. die Beschleunigung auf der vertikalen Achse als Funktion der Geschwindigkeit auf der horizontalen Achse, für negative Beschleunigungen, die Bremsvorgänge bezeichnen.

Die stärksten negativen Beschleunigungen treten im Bereich von ungefähr 50 km/h, d. h. im Stadtverkehr auf, und entsprechen einem starken Bremsen, das eine hohe Abnutzung des Kraftfahrzeugs 2 zur Folge hat. Im Bereich hoher Geschwindigkeiten, insbesondere bei Geschwindigkeiten von mehr als 100 km/h, treten dagegen kaum starke Bremsvorgänge auf.

### Bremsprofile:

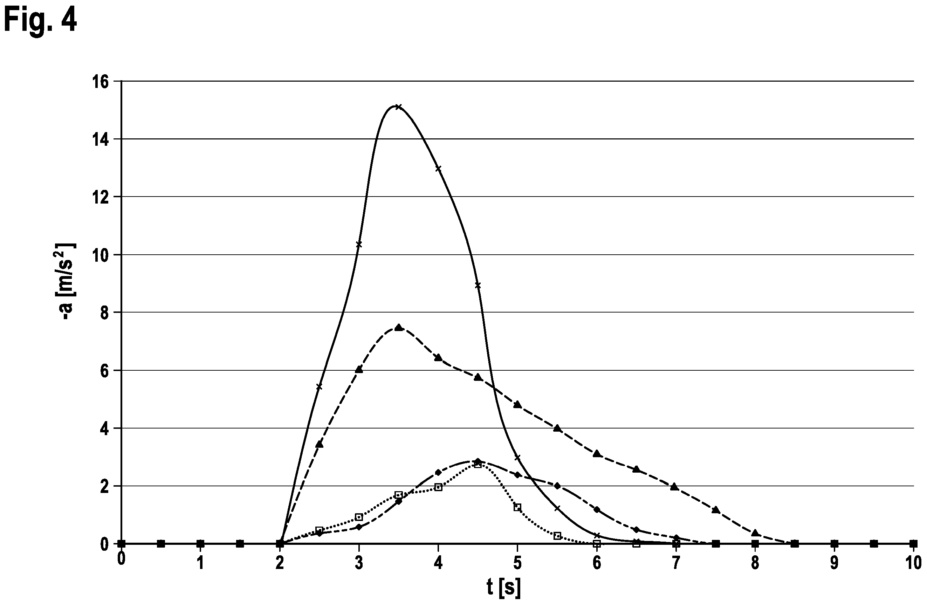

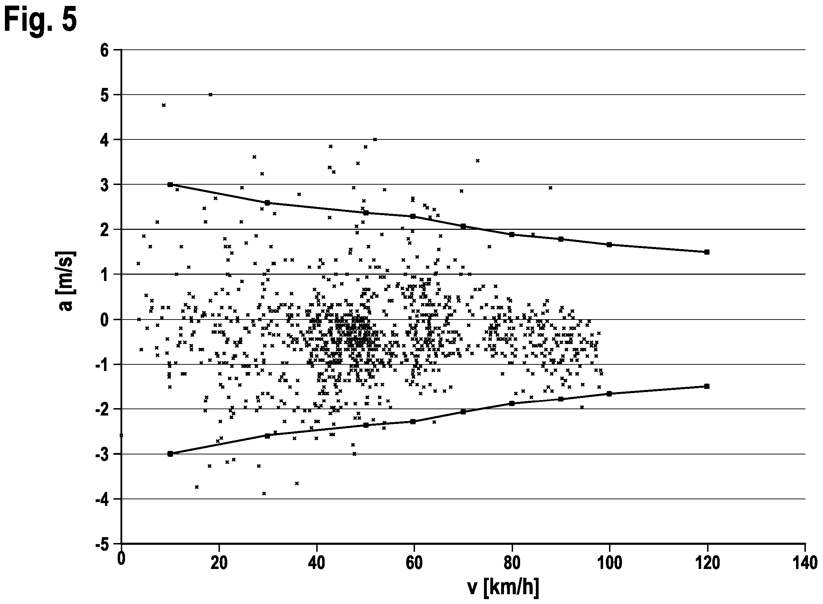

Anhand der in der Fig. 4 gezeigten Bremsprofile, in denen die negative Beschleunigung als Funktion der Zeit aufgetragen ist, können verschiedene Bremstypen, die eine unterschiedliche Belastung des Kraftfahrzeugs 2 zur Folge haben, unterschieden werden.

Die Strichpunktlinie beschreibt ein moderates Bremsmuster, bei dem der Fahrer langsam abbremst und dann entweder anhält oder mit niedrigerer Geschwindigkeit weiterfährt. Dieses Bremsmuster entspricht einem vorausschauenden Fahrstil eines sicheren und entspannten Fahrers, der eine geringe Abnutzung der Kraftfahrzeugs 2 zur Folge hat.

Die gepunktete Linie zeigt das Bremsprofil eines vorausschauenden Fahrers, der vorausschauend fährt und die Verkehrssituation gut voraussieht. Er führt nur leichte Bremsvorgänge durch, löst die Bremse dann aber schnell (steiler Abfall der Kurve nach ihrem Höhepunkt bei ca. 4,5 s). Diese Fahrweise hat eine geringfügig höhere Abnutzung als die zuvor beschriebene moderate Fahrweise zur Folge.

Die gestrichelte Linie zeigt das Bremsprofil eines Fahrers, der hart bremst, z. B. weil der Abstand zum vorausfahrenden Fahrzeug zu klein geworden ist, nach dem harten Auslösen des Bremsvorgangs wird das Kraftfahrzeug 2 sanfter weiter abgebremst. Dieser nervöse Fahrstil hat eine erhöhte Abnutzung des Kraftfahrzeugs 2 zur Folge und wird daher einem relativ großen Belastungsparameter zugeordnet.

Die durchgezogene Linie zeigt schließlich das Bremsprofil einer starken Bremsung aufgrund einer unerwarteten Verkehrssituation. Dies ist mit einer besonders starken Abnutzung des Kraftfahrzeugs 2 (= großer Belastungsparameter) verbunden.

Die Unterscheidung der verschiedenen Bremsprofile kann anhand ihrer jeweiligen Gradienten erfolgen. Der Bremsvorgang beginnt mit einem positiven Gradienten der negativen Beschleunigung (zunehmende Bremswirkung), bis der Höhepunkt erreicht ist. Dann nimmt die Bremswirkung ab, bis die (negative) Beschleunigung Null erreicht. Nachdem beide Gradienten (für die Bereiche vor und nach dem Höhepunkt der Kurve) berechnet worden sind, kann das zugeordnete Bremsprofil bestimmt werden. Insbesondere Gradienten von mehr als 4 m/s² weisen auf plötzliches und/oder intensives Bremsen hin, das zu einer hohen Belastung und Abnutzung des Kraftfahrzeugs 2 führt, und werden daher großen Belastungsparametern zugeordnet.

Die Belastungsprofile des Kraftfahrzeugs 2, insbesondere die auf den Bremsprofilen basierende Belastungsprofile, können genutzt werden, um die Abnutzung der Reifen 7 und der Bremsen, insbesondere der Bremsbeläge, des Kraftfahrzeugs 2 abzuschätzen und Wartungsintervalle, insbesondere zum Wechsel der Reifen 7 und/oder der Bremsbeläge zu bestimmen.

### Querbeschleunigung:

Auch die Querbeschleunigung des Kraftfahrzeugs 2 kann in Abhängigkeit von der Geschwindigkeit ausgewertet werden. Dies verbessert das Ergebnis der Auswertung, da innerorts, bei relativ niedrigen Geschwindigkeiten, aufgrund der engen Radien, z. B. beim Abbiegen, auch bei einer defensiven Fahrweise hohe Querbeschleunigungen auftreten, wogegen dieselben Querbeschleunigungen in höheren Geschwindigkeitsbereichen auf eine unruhige Fahrweise hindeuten.

Tabelle 3 zeigt beispielhaft die Querbeschleunigungen, die beim Durchfahren von Kurven, die den angegebenen Radius R haben, mit der angegebenen Geschwindigkeit auftreten.

**Tabelle 3:**

| Geschwindigkeit [km/h] | Kurvenradius [m] | Querbeschleunigung [m/s²] |
|---|---|---|
| 50 | 80 | 2,4 |
| 60 | 120 | 2,3 |
| 70 | 180 | 2,1 |
| 80 | 250 | 1,9 |
| 90 | 340 | 1,8 |
| 100 | 450 | 1,7 |
| 120 | 720 | 1,5 |

Dies zeigt, dass die Ergebnisse der Auswertung der Querbeschleunigungen erheblich verbessert werden können, wenn die Querbeschleunigungen in Kombination mit der jeweiligen Geschwindigkeit bewertet werden.

Fig. 4 zeigt beispielhaft die während einer Fahrt aufgetretenen Querbeschleunigungen auf der vertikalen Achse als Funktion der Geschwindigkeit auf der horizontalen Achse. Die gestrichelten Linien bezeichnen die maximalen bei der Konstruktion der Straßen für die jeweilige Geschwindigkeit vorgesehenen Querbeschleunigungen. Beschleunigungswerte außerhalb (oberhalb bzw. unterhalb) der gestrichelten Linien weisen daher auf Fahrzustände hin, in denen sich das Kraftfahrzeug 2 außerhalb des bei der Konstruktion der jeweiligen Straße vorgesehenen Bereichs befindet, d. h. zu schnell durch die Kurve fährt. Solche Fahrzustände sind in der Regel mit einer hohen Belastung und einer daraus resultierenden hohen Abnutzung des Kraftfahrzeugs 2 verbunden und werden daher einem hohen Belastungsparameter zugeordnet.

### Dauer der Fahrt:

Darüber hinaus kann auch die Fahrtdauer des Kraftfahrzeugs 2 herangezogen werden, um die Belastung und Abnutzung er Kraftfahrzeugs 2 zu bestimmen. Dabei kann insbesondere der Anteil der aktuellen Fahrtdauer an der Gesamtfahrdauer über die letzten 30 Tage ausgewertet werden, um zu bestimmen, ob das Kraftfahrzeug 2 in den letzten 30 Tagen gleichmäßig oder ungleichmäßig genutzt worden ist, wobei eine ungleichmäßige Nutzung des Kraftfahrzeugs 2 eine erhöhte Abnutzung zur Folge hat und daher einem erhöhten Abnutzungsparameter zugeordnet wird.

Auch können besonders kurze Fahrtdauern, die zu einer überproportional hohen Belastung des Kraftfahrzeugs 2 führen, da der Motor 4 seine Betriebstemperatur nicht erreicht, einem besonders großen Abnutzungsparameter zugeordnet werden.

## Patentansprüche

1. Vorrichtung zum Bestimmen von Belastungsprofilen von Kraftfahrzeugen (2), insbesondere einer Fahrzeugflotte, mit wenigstens einer Fahrzustandsbewertungsvorrichtung (18);
wenigstens einer in einem Kraftfahrzeug (2) angeordneten Fahrzustandsbestimmungsvorrichtung (8), wobei die wenigstens eine Fahrzustandsbestimmungsvorrichtung (8) ausgebildet ist, wiederholt wenigstens einen Fahrzustandsparameter des Kraftfahrzeugs (2) zu bestimmen und an die wenigstens eine Fahrzustandsbewertungsvorrichtung (18) zu übertragen;
wobei die wenigstens eine Fahrzustandsbewertungsvorrichtung (18) ausgebildet ist, jedem von der wenigstens einen Fahrzustandsbestimmungsvorrichtung (8) bestimmten Fahrzustandsparameter einen numerischen Belastungsparameter zuzuordnen; und
einer Additionsvorrichtung (20), die ausgebildet ist, die numerischen Belastungsparameter zu einem numerischen Gesamtbelastungsparameter zu addieren, **dadurch gekennzeichnet, dass** die wenigstens eine Fahrzustandsbewertungsvorrichtung (18) ferner ausgebildet ist, aus einer Kombination von wenigstens zwei Fahrzustandsparametern einen Belastungsparameter zu bestimmen, wobei die Kombination von wenigstens zwei Fahrzustandsparametern die Geschwindigkeit des Kraftfahrzeugs (2) und die Längs- und/oder Querbeschleunigung des Kraftfahrzeugs (2) umfasst.

2. Vorrichtung nach Anspruch 1, wobei die Vorrichtung zusätzlich eine Vergleichsvorrichtung (22) umfasst, die ausgebildet ist, die numerischen Gesamtbelastungsparameter mehrerer Kraftfahrzeuge (2) miteinander zu vergleichen, wobei die Vergleichsvorrichtung (22) eine Sortiervorrichtung (24) umfasst, die ausgebildet ist, die Kraftfahrzeuge (2) anhand ihrer Gesamtbelastungsparameter zu sortieren.

3. Vorrichtung nach Anspruch 1 oder 2, wobei die Fahrzustandsbewertungsvorrichtung (18) umfasst:
eine Speichervorrichtung (18a), in der erste und zweite Einträge gespeichert sind, wobei jeder zweite Eintrag mit wenigstens einem ersten Eintrag verknüpft ist; und
eine Vergleichs- und Zuordnungsvorrichtung (18b), die ausgebildet ist, durch Vergleichen des bestimmten Fahrzustandsparameters mit den ersten Einträgen einen ersten Eintrag auszuwählen und dem Fahrzustandsparameter einen mit dem ersten Eintrag verknüpften zweiten Eintrag als Belastungsparameter zuzuordnen.

4. Vorrichtung nach einem der Ansprüche 1 bis 3, wobei der Fahrzustandsparameter zudem wenigstens eine der Größen Betriebsdauer, des Kraftfahrzeugs (2), Drehzahl des Motors (4) und/oder die Standardabweichung wenigstens einer dieser Größen während einer Fahrt des Kraftfahrzeugs (2) umfasst.

5. Vorrichtung nach einem der Ansprüche 1 bis 4, wobei die Fahrzustandsbewertungsvorrichtung (18) ausgebildet ist, zu bestimmen, wie oft der Fahrzustandsparameter einen dem Fahrzustandsparameter zugeordneten vorgegebenen Grenzwert überschreitet, und der Anzahl der Überschreitungen des Grenzwertes während einer Fahrt des Kraftfahrzeugs (2) einen numerischen Belastungsparameter zuzuordnen.

6. Vorrichtung nach einem der vorangegangenen Ansprüche, wobei die Vorrichtung zusätzlich wenigstens eine Übertragungsvorrichtung (10) aufweist, die ausgebildet ist, Fahrzustandsparameter insbesondere drahtlos von der Fahrzustandsbestimmungsvorrichtung (8) an die Fahrzustandsbewertungsvorrichtung (18) zu übertragen und/oder Belastungsparameter insbesondere drahtlos von der Fahrzustandsbewertungsvorrichtung (18) an die Additionsvorrichtung (20) zu übertragen.

7. Verfahren zum Bestimmen von Belastungsprofilen von Kraftfahrzeugen (2) einer Fahrzeugflotte, mit wenigstens einer Fahrzustandsbewertungsvorrichtung (18), wenigstens einer in dem Kraftfahrzeug angeordneten Fahrzustandsbestimmungsvorrichtung (8) und einer Additionsvorrichtung (20), das die Schritte umfasst:
wiederholt wenigstens einen Fahrzustandsparameter des Kraftfahrzeugs (2) mittels der wenigstens einen Fahrzustandsbestimmungsvorrichtung zu bestimmen;
jedem von der wenigstens einen Fahrzustandsbestimmungsvorrichtung (8) bestimmten Fahrzustandsparameter einen numerischen Belastungsparameter zuzuordnen; und
die numerischen Belastungsparameter eines Kraftfahrzeugs (2) mittels der Additionsvorrichtung (20) zu einem numerischen Gesamtbelastungsparameter addieren, **dadurch gekennzeichnet, dass** aus einer Kombination von wenigstens zwei Fahrzustandsparametern ein numerischer Belastungsparameter mittels der wenigstens einen Fahrzustandsbewertungsvorrichtung (18) bestimmt wird, wobei die Kombination von wenigstens zwei Fahrzustandsparametern die Geschwindigkeit des Kraftfahrzeugs (2) und die Längs- und/oder Querbeschleunigung des Kraftfahrzeugs (2) umfasst.

8. Verfahren nach Anspruch 7, das zusätzlich umfasst, die numerischen Gesamtbelastungsparameter mehrerer Kraftfahrzeuge (2) der Fahrzeugflotte miteinander zu vergleichen und die Kraftfahrzeuge (2) anhand ihrer Gesamtbelastungsparameter zu sortieren.

## Claims

1. Device for determining stress profiles of motor vehicles (2), in particular of a vehicle fleet, comprising at least one driving state assessment device (18) ;
at least one driving state determination device (8) arranged in a motor vehicle (2), wherein the at least one driving state determination device (8) is designed to determine at least one driving state parameter of the motor vehicle (2) repeatedly and to transmit it to the at least one driving state assessment device (18);
wherein the at least one driving state assessment device (18) is designed to assign a numeric stress parameter to each driving state parameter determined by the at least one driving state determination device (8); and
an addition device (20), which is designed to add the numeric stress parameters to a numeric total stress parameter,
**characterized in that**
the at least one driving state assessment device (18) is also designed to determine a stress parameter from a combination of at least two driving state parameters, wherein the combination of at least two driving state parameters comprises the speed of the motor vehicle (2) and the longitudinal and/or transverse acceleration of the motor vehicle (2).

2. Device according to Claim 1, wherein the device additionally comprises a comparison device (22), which is designed to compare the numeric total stress parameters of a plurality of motor vehicles (2) with one another, wherein the comparison device (22) comprises a sorting device (24), which is designed to sort the motor vehicles (2) by using their total stress parameters.

3. Device according to Claim 1 or 2, wherein the driving state assessment device (18) comprises:
a memory device (18a), in which first and second entries are stored, each second entry being linked to at least one first entry; and
a comparison and assignment device (18b), which is designed to select a first entry by comparing the determined driving state parameter with the first entries, and to assign a second entry linked to the first entry to the driving state parameter as a stress parameter.

4. Device according to one of Claims 1 to 3, wherein the driving state parameter additionally comprises at least one of the variables comprising the operating period of the motor vehicle (2), the rotational speed of the engine (4) and/or the standard deviation of at least one of these variables during a journey of the motor vehicle (2).

5. Device according to one of Claims 1 to 4, wherein the driving state assessment device (18) is designed to determine how often the driving state parameter exceeds a predefined limiting value associated with the driving state parameter, and to assign a numerical stress parameter to the number of times that the limiting value is exceeded during a journey of the motor vehicle (2).

6. Device according to one of the preceding claims, wherein the device additionally has at least one transmission device (10), which is designed for the wire-free transmission of driving state parameters from the driving state determination device (8) to the driving state assessment device (18) and/or for the in particular wire-free transmission of stress parameters from the driving state assessment device (18) to the addition device (20).

7. Method for determining stress profiles of motor vehicles (2) of a vehicle fleet, comprising at least one driving state assessment device (18), at least one driving state determination device (8) arranged in the motor vehicle and an addition device (20), which comprises the steps:
determining at least one driving state parameter of the motor-vehicle (2) repeatedly by means of the at least one driving state determination device;
assigning a numeric stress parameter to each driving state parameter determined by the at least one driving state determination device (8); and
adding the numeric stress parameter of a motor vehicle (2) to a numeric total stress parameter by means of the addition device (20),
**characterized in that** a numeric stress parameter is determined from a combination of at least two driving state parameters by means of the at least one driving state assessment device (18), wherein the combination of at least two driving state parameters comprises the speed of the motor vehicle (2) and the longitudinal and transverse acceleration of the motor vehicle (2).

8. Method according to Claim 7, which additionally comprises comparing the numeric total stress parameters of a plurality of motor vehicles (2) of the vehicle fleet with one another and sorting the motor vehicles (2) by using their total stress parameters.

## Revendications

1. Dispositif de détermination de profils de charge de véhicules automobiles (2), notamment d'un parc de véhicules, ledit dispositif de détermination comprenant au moins un dispositif d'évaluation d'état de conduite (18) ;
au moins un dispositif de détermination d'état de conduite (8) disposé dans un véhicule automobile (2), l'au moins un dispositif de détermination d'état de conduite (8) étant conçu pour déterminer de manière répétée au moins un paramètre d'état de conduite du véhicule automobile (2) et pour transmettre celui-ci à au moins un dispositif d'évaluation d'état de conduite (18) ;
l'au moins un dispositif d'évaluation d'état de conduite (18) étant conçu pour associer un paramètre de charge numérique à chaque paramètre d'état de conduite déterminé par l'au moins un dispositif de détermination d'état de conduite (8) ; et
un dispositif d'addition (20) qui est conçu pour additionner les paramètres de charge numériques afin de former un paramètre de charge totale numérique, **caractérisé en ce que** l'au moins un dispositif d'évaluation d'état de conduite (18) est également conçu pour déterminer un paramètre de charge à partir d'une combinaison d'au moins deux paramètres d'état de conduite, la combinaison d'au moins deux paramètres d'état de conduite comprenant la vitesse du véhicule automobile (2) et l'accélération longitudinale et/ou transversale du véhicule automobile (2).

2. Dispositif selon la revendication 1, le dispositif comprenant en outre un dispositif de comparaison (22) qui est conçu pour comparer entre eux les paramètres de charge totale numériques de plusieurs véhicules automobiles (2), le dispositif de comparaison (22) comprenant un dispositif de tri (24) qui est conçu pour trier les véhicules automobiles (2) sur la base de leurs paramètres de charge totale.

3. Dispositif selon la revendication 1 ou 2, le dispositif d'évaluation d'état de conduite (18) comprenant :
un dispositif de mémorisation (18a) dans lequel des première et deuxième entrées sont mémorisées, chaque deuxième entrée étant associée à au moins une première entrée ; et
un dispositif de comparaison et d'association (18b) qui est conçu pour sélectionner une première entrée en comparant le paramètre d'état de conduite déterminé aux premières entrées et pour associer une deuxième entrée, combinée à la première entrée, au paramètre d'état de conduite en tant que paramètre de charge.

4. Dispositif selon l'une des revendications 1 à 3, le paramètre d'état de conduite comprenant également l'une au moins des grandeurs suivantes : durée de fonctionnement du véhicule automobile (2), vitesse de rotation du moteur (4) et/ou écart-type d'au moins une de ces grandeurs lors d'un trajet du véhicule automobile (2).

5. Dispositif selon l'une des revendications 1 à 4, le dispositif d'évaluation d'état de conduite (18) étant conçu pour déterminer la fréquence à laquelle le paramètre d'état de conduite dépasse une valeur limite spécifiée associée au paramètre d'état de conduite, et pour associer un paramètre de charge numérique au nombre de fois que la valeur limite est dépassée pendant la conduite du véhicule automobile (2).

6. Dispositif selon l'une des revendications précédentes, le dispositif comportant en plus au moins un dispositif de transmission (10) qui est conçu pour transmettre des paramètres d'état de conduite, en particulier sans fil, du dispositif de détermination d'état de conduite (8) au dispositif d'évaluation d'état de conduite (18) et/ou pour transmettre des paramètres de charge, en particulier sans fil, du dispositif d'évaluation d'état de conduite (18) au dispositif d'addition (20).

7. Procédé de détermination de profils de charge de véhicules automobiles (2) dans un parc de véhicules, à l'aide d'au moins un dispositif d'évaluation d'état de conduite (18), d'au moins un dispositif de détermination d'état de conduite (8) disposé dans le véhicule automobile et d'un dispositif d'addition (20), ledit procédé comprenant les étapes suivantes :
déterminer de manière répétée au moins un paramètre d'état de conduite du véhicule automobile (2) au moyen de l'au moins un dispositif de détermination d'état de conduite ;
associer un paramètre de charge numérique à chaque paramètre d'état de conduite déterminé par l'au moins un dispositif de détermination d'état de conduite (8) ; et
additionner les paramètres de charge numériques d'un véhicule automobile (2) à l'aide du dispositif d'addition (20) afin de former un paramètre de charge totale numérique, **caractérisé en ce qu'**un paramètre de charge numérique est déterminé à partir d'une combinaison d'au moins deux paramètres d'état de conduite à l'aide de l'au moins un dispositif d'évaluation d'état de conduite (18), la combinaison d'au moins deux paramètres d'état de conduite comprenant la vitesse du véhicule automobile (2) et l'accélération longitudinale et/ou transversale du véhicule automobile (2).

8. Procédé selon la revendication 7, qui comprend en outre les étapes de comparaison des paramètres de charge totale numériques de plusieurs véhicules automobiles (2) du parc automobile entre eux et de tri des véhicules automobiles (2) sur la base de leurs paramètres de charge totale.
